# EUROPEAN PATENT SPECIFICATION

(11) **EP 3 428 489 B1**
(45) Date of publication and mention of the grant of the patent: **31.03.2021**
(21) Application number: 18172174.7
(22) Date of filing: 14.05.2018
(51) Int. Cl.: F16J 15/44, F01D 11/02

(54) **HYDROSTATIC NON-CONTACT SEAL WITH SEAL CARRIER ELIMINATION**
HYDROSTATISCHE BERÜHRUNGSLOSE DICHTUNG MIT DICHTUNGSTRÄGERBESEITIGUNG
JOINT HYDROSTATIQUE SANS CONTACT COMPORTANT ÉLIMINATION DE SUPPORT D'ÉTANCHÉITÉ

(30) Priority: 14.07.2017 US 201715650396
(43) Date of publication of application: 16.01.2019
(73) Proprietor: Raytheon Technologies Corporation, Farmington, CT 06032 (US)
(72) Inventor: CHUONG, Conway, Manchester, CT Connecticut 06040 (US); D'AMBRUOSO, Tara, Oxford, CT Connecticut 06478 (US); WONG, Joey, Enfield, CT Connecticut 06082 (US)
(74) Representative: Dehns

(56) References cited:
- US-A1- 2014 008 871
- US-A1- 2014 119 912
- US-A1- 2016 115 804

## Description

### BACKGROUND OF THE INVENTION

### 1. Technical Field

The present disclosure relates generally to hydrostatic non-contact seals. More particularly, the disclosure relates to hydrostatic non-contact seals that includes an axially expanded seal base/outer ring.

### 2. Background Information

Rotational equipment typically includes one or more seal assemblies for sealing gaps between rotors and stators. A typical seal assembly includes a contact seal with a seal element such as a knife edge seal that engages a seal land. The hydrostatic non-contact seal includes a full ring portion that connects beams and shoes together, in order to function properly as a full seal ring. The typical seal assembly also includes a carrier that radially houses the seal assembly. The seal assembly components are snapped and radially contained in the carrier. The carrier takes up valuable radial space.

It would be desirable to reduce the radial height and/or the weight of the seal.

US 2014/008871 A1 discloses a prior art seal assembly as set forth in the preamble of claim 1.

US 2016/115804 A1 discloses another prior art assembly.

### SUMMARY OF THE DISCLOSURE

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the disclosure are directed to a non-contact seal assembly according to claim 1 or 2.

A secondary seal device support ring may be radially adjacent to and engaged with the first inner radial seal base surface, and the secondary seal device support ring may be radially proximate to the first inner radial seal base surface.

The non-contact seal assembly may further comprise a second ring structure that is adjacent to and engaged with the second first inner radial seal base surface, where the second ring structure ring is radially proximate to the second inner radial seal base surface.

The seal assembly may comprise nickel alloy.

The seal assembly may comprise one of cobalt alloy or aluminum.

The first seal shoe may extend circumferentially, at the first shoe end, between a first shoe side and a second shoe side for a seal shoe length.

The seal shoes may collectively form a substantially annular end surface at the second shoe end.

The seal base may be connected to a stator structure that is substantially cylindrical and extends circumferentially around and faces towards the centerline.

According to another aspect of the present disclosure, an assembly for rotational equipment with an axial centerline is provided according to claim 10.

The assembly may further comprise a secondary seal device support ring radially adjacent to and engaged with the first inner radial seal base surface, where the secondary seal device support ring is radially proximate to the first inner radial seal base surface.

The seal base may be radially adjacent to and connected to the stator structure.

### BRIEF DESCRIPTION OF THE DRAWINGS

The present disclosure is illustrated by way of example and not limited in the accompanying figures in which like reference numerals indicate similar elements. The drawing figures are not necessarily drawn to scale unless specifically indicated otherwise.
FIG. 1 is an illustration of a reduced height hydrostatic non-contact seal with an axially lengthened seal base/outer ring.
FIG. 2 is an end illustration of a section of the seal of FIG. 1.
FIG. 3 is a side cutaway illustration of a gas turbine engine.

### DETAILED DESCRIPTION

It is noted that various connections are set forth between elements in the following description and in the drawings (the contents of which are incorporated in this specification by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities or a space/gap between the entities that are being coupled to one another.

Aspects of the disclosure may be applied in connection with a gas turbine engine.

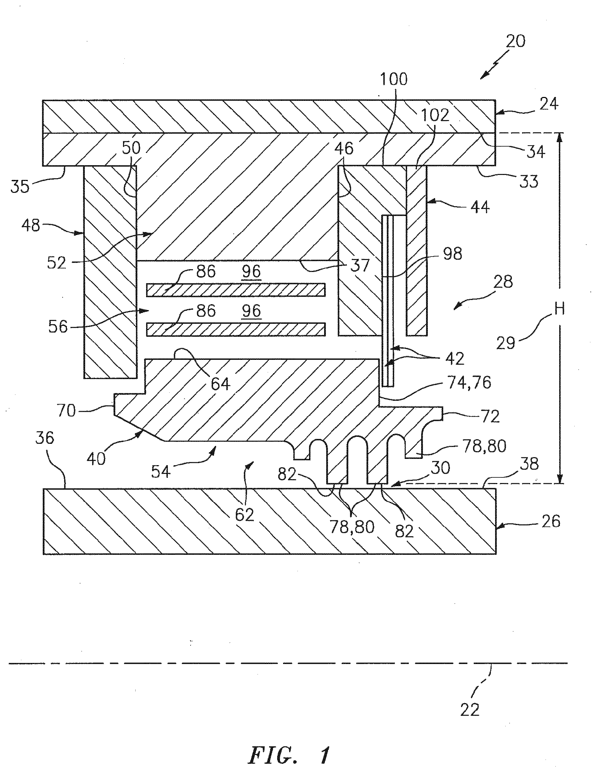

FIG. 1 illustrates an assembly 20 for rotational equipment with an axial centerline 22. An example of such rotational equipment is a gas turbine engine for an aircraft propulsion system, an exemplary embodiment of which is described below in further detail. However, the assembly 20 of the present disclosure is not limited to such an aircraft or gas turbine engine application. The assembly 20, for example, may alternatively be configured with rotational equipment such as an industrial gas turbine engine, a wind turbine, a water turbine, or any other apparatus in which a seal is provided between a stator structure and a rotor structure.

The assembly 20 includes a stator structure 24, a rotor structure 26 and a seal assembly 28. This seal assembly 28 is mounted with the stator structure 24, and configured to substantially seal an annular gap 30 between the stator structure 24 and the rotor structure 26 as described below in further detail.

The stator structure 24 has an inner radial stator structure surface 34. This stator structure surface 34 may be substantially cylindrical, and extends circumferentially around and faces towards the axial centerline 22. The surface 34 at least partially forms a bore in the stator structure 24. This bore is sized to receive the seal assembly 28, which may be fixedly attached to a seal base/outer ring 52 by, for example, a press fit connection between the seal assembly 28 and the inner radial stator structure surface 34.

The rotor structure 26 includes a seal land 36. This seal land 36 may be a discrete, unitary annular body. Alternatively, the seal land 36 may be configured with another component / portion of the rotor structure 26. The seal land 36 has an outer radial seal land surface 38. This seal land surface 38 may be substantially cylindrical, and extends circumferentially around and faces away from the axial centerline 22.

The seal assembly 28 includes a primary seal device 40 and one or more secondary seal devices 42; e.g., 1, 2, 3 or more secondary seal devices 42. The seal assembly 28 also includes one or more additional components for positioning, supporting and/or mounting one or more of the seal devices 40 and 42 with the stator structure 24. The seal assembly 28 of FIG. 1, for example, includes a first ring structure 44 configured for positioning, supporting and/or mounting the secondary seal devices 42 relative to the primary seal device 40. This first ring structure 44 may also be configured for axially positioning and/or supporting a second end surface 46 of the primary seal device 40 relative to the stator structure 24. The seal assembly 28 also includes a second ring structure 48 (e.g., a scalloped support ring) configured for axially positioning and/or supporting a first end surface 50 of the primary seal device 40 relative to the stator structure 24. However, the second ring structure 48 may be omitted where, for example, the first end surface 50 of the primary seal device 40 may be abutted against another component / portion of the stator structure 24 (e.g., an annular or castellated shoulder) or otherwise axially positioned / secure with the stator structure 24.

The primary seal device 40 may be configured as an annular non-contact seal device and, more particularly, a hydrostatic non-contact seal device. An example of such a hydrostatic non-contact seal device is a Hydrostatic Adaptive Low Leakage ("HALO™)" seal; however, the primary seal device 40 of the present disclosure is not limited to the foregoing exemplary hydrostatic non-contact seal device.

The primary seal device 40 includes a plurality of seal shoes 54, a plurality of spring elements 56 and the seal base/outer ring 52. The seal base/outer ring 52 includes first, second and third inner seal base surfaces 33, 35, 37, respectively, where the third inner seal base surface 37 is axially between the first and second inner seal base surfaces 33, 35. In addition, the third inner seal base surface 37 is radially proximate the axial centerline 22 with respect to the radially more distal first and second inner seal base surfaces 33, 35. The seal land surface 38 is disposed to face towards and is axially aligned with the seal base surfaces 33, 35, 37. The seal shoes 54 are configured as arcuate bodies arranged circumferentially about the axial centerline 22 in an annular array. This annular array of the seal shoes 54 extends circumferentially around the axial centerline 22, thereby forming an inner bore at an inner radial side 62 of the primary seal device 40. The inner bore is sized to receive the seal land 36, where the rotor structure 26 projects axially through (or into) the inner bore formed by the seal shoes 54.

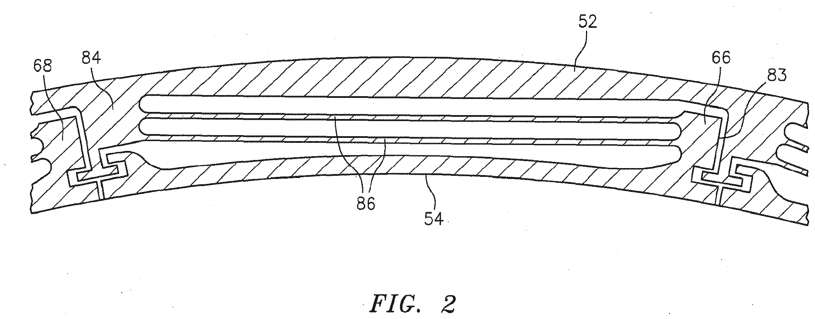

FIG. 2 is an end illustration of a section of the primary seal device 40. Each of the seal shoes 54 extends radially from the inner radial side 62 of the primary seal device 40 to an outer radial surface 64 of that seal shoe 54. Each of the seal shoes 54 extends circumferentially around the axial centerline 22 between opposing first and second circumferential sides 66 and 68 of that seal shoe 54.

Referring again to FIG. 1, each of the seal shoes 54 extends axially along the axial centerline 22 between a first shoe end 70 and a second shoe end 72. The seal shoes 54 of the present disclosure, however, are not limited to such exemplary relationships.

Each of the seal shoes 54 may include an arcuate end surface 74 generally at (e.g., on, adjacent or proximate) the second shoe end 72. In the array these arcuate end surfaces 74 collectively form a generally annular (but circumferentially segmented) end surface 76 configured for sealing engagement with the secondary seal devices 42. The seal shoes 54 of the present disclosure, however, are not limited to the foregoing exemplary configuration.

Each of the seal shoes 54 includes one or more arcuate protrusions 78, which collectively form one or more (e.g., a plurality of) axially spaced generally annular (e.g., circumferentially segmented) ribs 80 at the inner radial side 62. Distal inner radial ends 82 of one or more of these ribs 80 are configured to be arranged in close proximity with (but not touch) and thereby sealingly engage the seal land surface 38 in a non-contact manner, where the rotor structure 26 projects axially through (or into) the inner bore formed by the seal shoes 54. The ribs 80 therefore are configured, generally speaking, as non-contact knife edge seal elements.

Referring now to FIGs. 1-2, the spring elements 56 are arranged circumferentially about the axial centerline 22 in an annular array. The spring elements 56 are also arranged radially between the seal shoes 54 and the seal base 52. The spring element 56, for example, includes one or more mounts 83 and 84 (e.g., generally radial fingers / projections in FIG. 2) and one or more beams 86 (e.g., cantilever-leaf springs) extending between the mounts 83, 84. The first mount 83 (FIG. 2) is connected to a respective one of the seal shoes 54 at (e.g., on, adjacent or proximate) the first circumferential side 66, where the opposing second circumferential side 68 of that seal shoe 54 is free floating. The second mount 84 is connected to an offset seal base/outer ring 52, and is generally circumferentially aligned with or near the second circumferential side 68. The spring elements 56 of the present disclosure, however, are not limited to the foregoing exemplary configuration or values.

During operation of the primary seal device 40, the pressure in the upstream and downstream cavities apply a fluid delta pressure to the seal shoes 54 causing each seal shoe 54 to respectively move radially relative to the seal land surface 38. The fluid velocity may increase as a gap between the seal shoe 54 and seal land surface 38 increases, thus reducing pressure in the gap and drawing the seal shoe 54 radially inwardly toward the seal land surface 38. As the gap closes, the velocity may decrease and the pressure may increase within the gap, thus, forcing the seal shoe 54 radially outwardly from the seal land surface 38. The respective spring element 56 may deflect and move with the seal shoe 54 to create a primary seal of the gap between the seal land surface 38 and ribs 80 within predetermined design tolerances.

Referring again to FIG. 1, while the primary seal device 40 is operable to generally seal the annular gap 30 between the stator structure 24 and the rotor structure 26 as described above, fluid (e.g., gas) may still flow axially through passages 96 defined by radial gaps between the components 52, 54 and 56. The secondary seal devices 42 therefore are provided to seal off these passages 96 and, thereby, further and more completely seal the annular gap 30.

Each of the secondary seal devices 42 may be configured as a ring seal element such as, but not limited to, a split ring. Alternatively, one or more of the secondary seal devices 42 may be configured as a full hoop body ring, an annular brush seal or any other suitable ring-type seal.

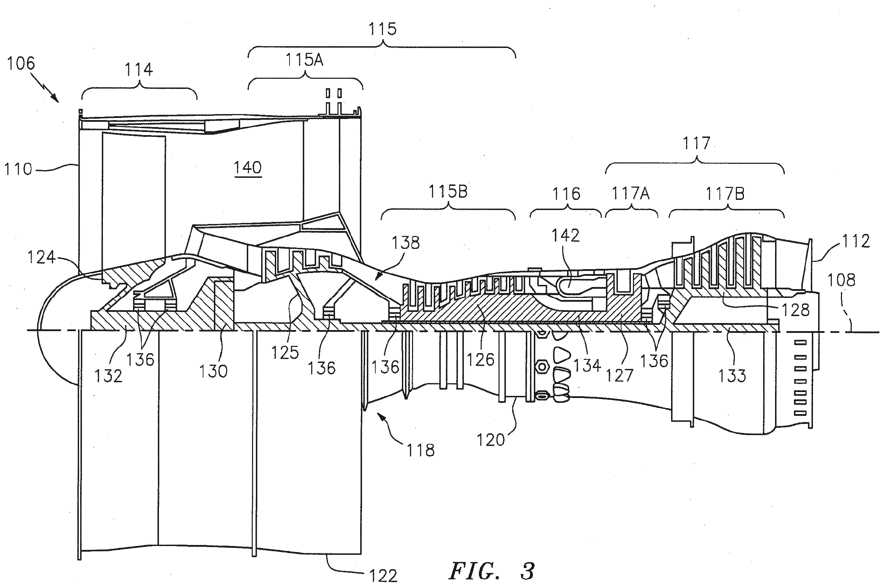

As described above, the assembly 20 of the present disclosure may be configured with various different types and configurations of rotational equipment. FIG. 3 illustrates one such type and configuration of the rotational equipment - a geared turbofan gas turbine engine 106. Such a turbine engine 106 includes various stator structures (e.g., bearing supports, hubs, cases, etc.) as well as various rotor structures (e.g., rotor disks, shafts, etc.) as described below, where the stator structure 24 and the rotor structure 26 can respectively be configured as anyone of the foregoing structures in the turbine engine 106 of FIG. 3, or other structures not mentioned herein. Referring again to FIG. 1, while the primary seal device 40 is operable to generally seal the annular gap 30 between the stator structure 24 and the rotor structure 26 as described above, fluid (e.g., gas) may still flow axially through passages 96 defined by radial gaps between the components 52, 54 and 56. The secondary seal devices 42 therefore are provided to seal off these passages 96 and, thereby, further and more completely seal the annular gap 30.

The secondary seal devices 42 of FIG. 1 are arranged together in an axial stack. In this stack, each of the secondary seal devices 42 axially engages (e.g., contacts) another adjacent one of the secondary seal devices 42. The stack of the secondary seal devices 42 is arranged with the first ring structure 44, which positions and mounts the secondary seal devices 42 with the stator structure 24 adjacent the primary seal device 40. In this arrangement, the stack of the secondary seal devices 42 is operable to axially engage and form a seal between the end surface 76 of the array of the seal shoes 54 and an annular surface 98 of the first ring structure 44. These surfaces 76 and 98 are axially aligned with one another, which enables the stack of the secondary seal devices 42 to slide radially against, but maintain sealing engagement with, the end surface 76 as the seal shoes 54 move radially relative to the seal land surface 38 as described above.

The first ring structure 44 may include a secondary seal device support ring 100 and a retention ring 102. The support ring 100 is configured with an annular full hoop body, which extends circumferentially around the axially centerline 22. The support ring 100 includes the annular surface 98, and is disposed axially adjacent and engaged with the seal base 52. The first ring structure 44 is radially adjacent to and engaged with the first inner radial seal base surface 33. The secondary seal device support ring 100 is also radially adjacent to and engaged with the first inner radial seal base surface 33. In addition, portions of the secondary seal device support ring 100 are also axially adjacent to the seal base 52 and the retention ring 102. The second ring structure 48 is radially adjacent to and engaged with the second inner radial seal base surface 35.

The retention ring 102 is configured with an annular full hoop body, which extends circumferentially around the axially centerline 22. The retention ring 102 is disposed axially adjacent and engaged with the support ring 100 and engaged with the first inner seal base surface 33, thereby capturing the stack of the secondary seal devices 42 within an annular channel formed between the rings 100 and 102. The stack of the secondary seal devices 42, may also or alternatively be attached to one of the rings 100 and 102 by, for example, a press fit connection and/or otherwise. Notably, the first ring structure 44 radially engages the first inner seal base surface 33, and the second ring structure 48 radially engages the second inner seal base surface 35. This allows the assembly 20 to be formed without the need for a dedicated and separable carrier, thus reducing height H 29 and part count of the seal assembly 20.

Referring to FIG. 3, the turbine engine 106 extends along an axial centerline 108 (e.g., the centerline 22) between an upstream airflow inlet 110 and a downstream airflow exhaust 112. The turbine engine 106 includes a fan section 114, a compressor section 115, a combustor section 116 and a turbine section 117. The compressor section 115 includes a low pressure compressor (LPC) section 115A and a high pressure compressor (HPC) section 115B. The turbine section 117 includes a high pressure turbine (HPT) section 117A and a low pressure turbine (LPT) section 117B.

The engine sections 114-117 are arranged sequentially along the centerline 108 within an engine housing 118, a portion or component of which may include or be connected to the stator structure 24. This housing 118 includes an inner case 120 (e.g., a core case) and an outer case 122 (e.g., a fan case). The inner case 120 may house one or more of the engine sections; e.g., an engine core. The outer case 122 may house at least the fan section 114.

Each of the engine sections 114, 115A, 115B, 117A and 117B includes a respective rotor 124-128. Each of these rotors 124-128 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 124 is connected to a gear train 130, for example, through a fan shaft 132. The gear train 130 and the LPC rotor 125 are connected to and driven by the LPT rotor 128 through a low speed shaft 133. The HPC rotor 126 is connected to and driven by the HPT rotor 127 through a high speed shaft 134. The shafts 132-134 are rotatably supported by a plurality of bearings 136; e.g., rolling element and/or thrust bearings. Each of these bearings 136 is connected to the engine housing 118 by at least one stationary structure such as, for example, an annular support strut.

During operation, air enters the turbine engine 106 through the airflow inlet 110. This air is directed through the fan section 114 and into a core gas path 138 and a bypass gas path 140. The core gas path 138 flows sequentially through the engine sections 115-117. The bypass gas path 140 flows away from the fan section 114 through a bypass duct, which circumscribes and bypasses the engine core. The air within the core gas path 138 may be referred to as "core air". The air within the bypass gas path 140 may be referred to as "bypass air".

The core air is compressed by the compressor rotors 125 and 126 and directed into a combustion chamber 142 of a combustor in the combustor section 116. Fuel is injected into the combustion chamber 142 and mixed with the compressed core air to provide a fuel-air mixture. This fuel air mixture is ignited and combustion products thereof flow through and sequentially cause the turbine rotors 127 and 128 to rotate. The rotation of the turbine rotors 127 and 128 respectively drive rotation of the compressor rotors 126 and 125 and, thus, compression of the air received from a core airflow inlet. The rotation of the turbine rotor 128 also drives rotation of the fan rotor 124, which propels bypass air through and out of the bypass gas path 140. The propulsion of the bypass air may account for a majority of thrust generated by the turbine engine 106, e.g., more than seventy-five percent (75%) of engine thrust. The turbine engine 106 of the present disclosure, however, is not limited to the foregoing exemplary thrust ratio.

The assembly 20 may be included in various aircraft and industrial turbine engines other than the one described above as well as in other types of rotational equipment; e.g., wind turbines, water turbines, rotary engines, etc. The assembly 20, for example, may be included in a geared turbine engine where a gear train connects one or more shafts to one or more rotors in a fan section, a compressor section and/or any other engine section. Alternatively, the assembly 20 may be included in a turbine engine configured without a gear train. The assembly 20 may be included in a geared or non-geared turbine engine configured with a single spool, with two spools (e.g., see FIG. 3), or with more than two spools. The turbine engine may be configured as a turbofan engine, a turbojet engine, a propfan engine, a pusher fan engine or any other type of turbine engine. The present invention therefore is not limited to any particular types or configurations of turbine engines or rotational equipment.

While various embodiments of the present invention have been disclosed, it will be apparent to those of ordinary skill in the art that many more embodiments and implementations are possible within the scope of the invention. For example, the embodiments of the present invention as described herein include several aspects and embodiments that include particular features. Although these features may be described individually, it is within the scope of the embodiments of the present invention that some or all of these features may be combined with any one of the aspects and remain within the scope of the invention. Accordingly, the present invention is not to be restricted except in light of the attached claims.

## Claims

1. A non-contact seal assembly, comprising:
a plurality of seal shoes (54) arranged about a centerline (22) in an annular array, the seal shoes (54) including a first seal shoe (54) extending axially along the centerline (22) between a first shoe end (70) and a second shoe end (72);
a seal base (52) circumscribing the annular array of the seal shoes (54), the seal base (52) comprising first, second and third inner radial seal base surfaces (33, 35, 37), where the third inner radial seal base surface (37) is axially between the first and second inner radial seal base surfaces (33, 35) and is radially proximate the centerline (22) with respect to the radially distal first and second inner radial seal base surfaces (33, 35); and
a plurality of spring elements (56), each of the spring elements (56) radially distal from and connecting to a respective one of the seal shoes (54) and radially proximate the third inner radial seal base surface (37);
**characterised by**
a secondary seal device (42); and
a first ring structure (44) configured and arranged to at least one of position, support or mount to the secondary seal device (42) axially separated from the seal base (52) and radially adjacent to the first seal shoe (54) at a proximate end and at a radially distal end is adjacent to and engaged with the first inner radial seal base surface (33).

2. A non-contact seal assembly, comprising:
a plurality of seal shoes (54) arranged about a centerline (22) in an annular array, the seal shoes (54) including a first seal shoe (54) extending axially along the centerline (22) between a first shoe end (70) and a second shoe end (72);
a seal base (52) circumscribing the annular array of the seal shoes (54); and
a plurality of spring elements (56), each of the spring elements (56) radially between and connecting a respective one of the seal shoes (54) with the seal base (52),
where the seal base (52) comprises first, second and third inner radial seal base surfaces (33, 35, 37), where the third inner radial seal base surface (37) is axially between the first and second inner radial seal base surfaces (33, 35) and is radially proximate the centerline (22) with respect to the radially distal first and second inner radial seal base surfaces (33, 35); and
where each of the spring elements (56) is radially distal from the third inner radial seal base surface (37);
**characterised by**
a secondary seal device (42); and
a first ring structure (44) configured and arranged to at least one of position, support or mount to the secondary seal device (42) axially separated from the seal base (52) and radially adjacent to the first seal shoe (54) at a proximate end and at a radially distal end is adjacent to and engaged with the first inner radial seal base surface (33).

3. The non-contact seal assembly of claim 1 or 2, further comprising a secondary seal device support ring (100) radially adjacent to and engaged with the first inner radial seal base surface (33), where the secondary seal device support ring (100) is radially proximate to the first inner radial seal base surface (33).

4. The non-contact seal assembly of claim 1, 2 or 3, further comprising a second ring structure (48) that is adjacent to and engaged with the second first inner radial seal base surface (35), where the second ring structure (48) is radially proximate to the second inner radial seal base surface (35).

5. The non-contact seal assembly of any preceding claim, where the seal assembly comprises nickel alloy.

6. The non-contact assembly of any of claims 1 to 4, where the seal assembly comprises one of cobalt alloy or aluminum.

7. The non-contact seal assembly of any preceding claim, where the first seal shoe (54) extends circumferentially, at the first shoe end (70), between a first shoe side (66) and a second shoe side (68) for a seal shoe length.

8. The non-contact seal assembly of any preceding claim, where the seal shoes (54) collectively form a substantially annular end surface (76) at the second shoe end (72).

9. The non-contact seal assembly of any preceding claim, where the seal base (52) is connected to a stator structure (24) that is substantially cylindrical and extends circumferentially around and faces towards the centerline (22).

10. An assembly for rotational equipment with an axial centerline, the assembly comprising:
a stator structure (24);
a rotor structure (26); and
a seal assembly (28) configured to substantially seal an annular gap (30) between the stator structure (24) and the rotor structure (26), the seal assembly (28) comprising a hydrostatic non-contact seal device (40) including a plurality of seal shoes (54), a seal base (52) and a plurality of spring elements (56);
the seal shoes (54) arranged about a centerline (22) in an annular array, the seal shoes (54) sealingly engaging the rotor structure (26) and including a first seal shoe (54) extending axially along the centerline (22) between a first shoe end (70) and a second shoe end (72);
a plurality of spring elements (56), each of the spring elements (56) radially between and connecting a respective one of the seal shoes (54) with the seal base (52),
where the seal base (52) comprises first, second and third inner radial seal base surfaces (33, 35, 37), where the third inner radial seal base surface (37) is axially between the first and second inner radial seal base surfaces (33, 35) and is radially proximate the centerline (22) with respect to the radially distal first and second inner radial seal base surfaces (33, 35); and
where each of the spring elements (56) is radially distal from the third inner radial seal base surface (37);
**characterised by**
a secondary seal device (42); and
a first ring structure (44) configured and arranged to at least one of position, support or mount to the secondary seal device (42) axially separated from the seal base (52) and radially adjacent to the first seal shoe (54) at a proximate end and at a radially distal end is adjacent to and engaged with the first inner radial seal base surface (33).

11. The assembly of claim 10, further comprising a secondary seal device support ring (100) radially adjacent to and engaged with the first inner radial seal base surface (33), where the secondary seal device support ring (100) is radially proximate to the first inner radial seal base surface (33).

12. The assembly of claim 10 or 11, where the seal base (52) is radially adjacent to and connected to the stator structure (24).

## Patentansprüche

1. Berührungslose Dichtungsanordnung, umfassend:
eine Vielzahl von Dichtungsschuhen (54), die um eine Mittellinie (22) herum in einem ringförmigen Array angeordnet ist, wobei die Dichtungsschuhe (54) einen ersten Dichtungsschuh (54) beinhalten, der sich axial entlang der Mittellinie (22) zwischen einem ersten Schuhende (70) und einem zweiten Schuhende (72) erstreckt;
eine Dichtungsbasis (52), die das ringförmige Array der Dichtungsschuhe (54) begrenzt, wobei die Dichtungsbasis (52) eine erste, zweite und dritte innere radiale Dichtungsbasisoberfläche (33, 35, 37) umfasst, wobei die dritte innere radiale Dichtungsbasisoberfläche (37) axial zwischen der ersten und zweiten inneren radialen Dichtungsbasisoberfläche (33, 35) liegt und radial in der Nähe der Mittellinie (22) in Bezug auf die radial distale erste und zweite innere radiale Dichtungsbasisoberfläche (33, 35) liegt; und
eine Vielzahl von Federelementen (56), wobei jedes Federelement (56) radial distal von einem jeweiligen der Dichtungsschuhe (54) liegt und mit diesem verbunden ist und radial in der Nähe der dritten inneren radialen Dichtungsbasisoberfläche (37) liegt;
**gekennzeichnet durch**
eine sekundäre Dichtungsvorrichtung (42); und
eine erste Ringstruktur (44), die an mindestens einem von Position, Träger oder Halterung an der sekundären Dichtungsvorrichtung (42) konfiguriert und angeordnet ist, die axial von der Dichtungsbasis (52) getrennt ist und radial an den ersten Dichtungsschuh (54) an einem proximalen Ende angrenzt und
an einem radial distalen Ende an die erste innere radiale Dichtungsbasisoberfläche (33) angrenzt und mit dieser in Eingriff steht.

2. Berührungslose Dichtungsanordnung, umfassend:
eine Vielzahl von Dichtungsschuhen (54), die um eine Mittellinie (22) in einem ringförmigen Array angeordnet ist, wobei die Dichtungsschuhe (54) einen ersten Dichtungsschuh (54) beinhalten, der sich axial entlang der Mittellinie (22) zwischen einem ersten Schuhende (70) und einem zweiten Schuhende (72) erstreckt;
eine Dichtungsbasis (52), die das ringförmige Array der Dichtungsschuhe (54) begrenzt; und
eine Vielzahl von Federelementen (56), wobei jedes der Federelemente (56) radial zwischen einem jeweiligen der Dichtungsschuhe (54) und der Dichtungsbasis (52) liegt und
diesen mit ihr verbindet,
wobei die Dichtungsbasis (52) eine erste, zweite und dritte innere radiale Dichtungsbasisoberfläche (33, 35, 37) umfasst,
wobei die dritte innere radiale Dichtungsbasisoberfläche (37) axial zwischen der ersten und zweiten inneren radialen Dichtungsbasisoberfläche (33, 35) liegt und radial in der Nähe der Mittellinie (22) in Bezug auf die radial distale erste und zweite innere radiale Dichtungsbasisoberfläche (33, 35) liegt; und
wobei jedes der Federelemente (56) radial distal von der dritten inneren radialen Dichtungsbasisoberfläche (37) liegt;
**gekennzeichnet durch**
eine sekundäre Dichtungsvorrichtung (42); und
eine erste Ringstruktur (44), die an mindestens einem von Position, Träger oder Halterung an der sekundären Dichtungsvorrichtung (42) konfiguriert und angeordnet ist, die axial von der Dichtungsbasis (52) getrennt ist und radial an den ersten Dichtungsschuh (54) an einem proximalen Ende angrenzt und an einem radial distalen Ende an die erste innere radiale Dichtungsbasisoberfläche (33) angrenzt und mit dieser in Eingriff steht.

3. Berührungslose Dichtungsanordnung nach Anspruch 1 oder 2, ferner umfassend einen Stützring (100) der sekundären Dichtungsvorrichtung, der radial an die erste innere radiale Dichtungsbasisoberfläche (33) angrenzt und mit dieser in Eingriff steht, wobei der Stützring (100) der sekundären Dichtungsvorrichtung radial in der Nähe der ersten inneren radialen Dichtungsbasisoberfläche (33) liegt.

4. Berührungslose Dichtungsanordnung nach Anspruch 1, 2 oder 3, ferner umfassend eine zweite Ringstruktur (48), die an die zweite erste innere radiale Dichtungsbasisoberfläche (35) angrenzt und mit dieser in Eingriff steht, wobei die zweite Ringstruktur (48) radial in der Nähe der zweiten inneren radialen Dichtungsbasisoberfläche (35) liegt.

5. Berührungslose Dichtungsanordnung nach einem der vorhergehenden Ansprüche, wobei die Dichtungsanordnung eine Nickellegierung umfasst.

6. Berührungslose Dichtungsanordnung nach einem der Ansprüche 1 bis 4, wobei die Dichtungsanordnung eines von einer Kobaltlegierung oder Aluminium umfasst.

7. Berührungslose Dichtungsanordnung nach einem der vorhergehenden Ansprüche, wobei sich der erste Dichtungsschuh (54) umfänglich an dem ersten Schuhende (70) zwischen einer ersten Schuhseite (66) und einer zweiten Schuhseite (68) um eine Dichtungsschuhlänge erstreckt.

8. Berührungslose Dichtungsanordnung nach einem der vorhergehenden Ansprüche, wobei die Dichtungsschuhe (54) gemeinsam eine im Wesentlichen ringförmige Endoberfläche (76) an dem zweiten Schuhende (72) ausbilden.

9. Berührungslose Dichtungsanordnung nach einem der vorhergehenden Ansprüche, wobei die Dichtungsbasis (52) mit einer Statorstruktur (24) verbunden ist, die im Wesentlichen zylindrisch ist und sich umfänglich um die Mittellinie (22) herum erstreckt und in Richtung der Mittellinie (22) zeigt.

10. Anordnung für eine Rotationsausrüstung mit einer axialen Mittellinie, wobei die Anordnung Folgendes umfasst:
eine Statorstruktur (24);
eine Rotorstruktur (26); und
eine Dichtungsanordnung (28), die konfiguriert ist, um einen ringförmigen Spalt (30) zwischen der Statorstruktur (24) und der Rotorstruktur (26) im Wesentlichen abzudichten, wobei die Dichtungsanordnung (28) eine hydrostatische berührungsfreie Dichtungsvorrichtung (40) umfasst, die eine Vielzahl von Dichtungsschuhen (54), eine Dichtungsbasis (52) und eine Vielzahl von Federelementen (56) beinhaltet;
wobei die Dichtungsschuhe (54) um eine Mittellinie (22) herum in einem ringförmigen Array angeordnet sind, wobei die Dichtungsschuhe (54) die Rotorstruktur (26) in Eingriff nehmen und einen ersten Dichtungsschuh (54) beinhalten, der sich axial entlang der Mittellinie (22) zwischen einem ersten Schuhende (70) und einem zweiten Schuhende (72) erstreckt;
eine Vielzahl von Federelementen (56), wobei jedes der Federelemente (56) radial zwischen einem jeweiligen der Dichtungsschuhe (54) und der Dichtungsbasis (52) liegt und diesen mit ihr verbindet,
wobei die Dichtungsbasis (52) eine erste, zweite und dritte innere radiale Dichtungsbasisoberfläche (33, 35, 37) umfasst,
wobei die dritte innere radiale Dichtungsbasisoberfläche (37) axial zwischen der ersten und zweiten inneren radialen Dichtungsbasisoberfläche (33, 35) liegt und radial in der Nähe der Mittellinie (22) in Bezug auf die radial distale erste und zweite innere radiale Dichtungsbasisoberfläche (33, 35) liegt;
und
wobei jedes der Federelemente (56) radial distal von der dritten inneren radialen Dichtungsbasisoberfläche (37) liegt;
**gekennzeichnet durch**
eine sekundäre Dichtungsvorrichtung (42); und
eine erste Ringstruktur (44), die an mindestens einem von Position, Träger oder Halterung an der sekundären Dichtungsvorrichtung (42) konfiguriert und angeordnet ist, die axial von der Dichtungsbasis (52) getrennt ist und radial an den ersten Dichtungsschuh (54) an dem proximalen Ende angrenzt und an einem radial distalen Ende an die erste innere radiale Dichtungsbasisoberfläche (33) angrenzt und mit dieser in Eingriff steht.

11. Anordnung nach Anspruch 10, ferner umfassend einen Stützring (100) der sekundären Dichtungsvorrichtung, der radial an die erste innere radiale Dichtungsbasisoberfläche (33) angrenzt und mit dieser in Eingriff steht, wobei der Stützring (100) der sekundären Dichtungsvorrichtung radial in der Nähe der ersten inneren radialen Dichtungsbasisoberfläche (33) liegt.

12. Anordnung nach Anspruch 10 oder 11, wobei die Dichtungsbasis (52) radial an die Statorstruktur (24) angrenzt und mit dieser verbunden ist.

## Revendications

1. Ensemble joint sans contact, comprenant :
une pluralité de patins d'étanchéité (54) agencés autour d'une ligne médiane (22) dans un réseau annulaire, les patins d'étanchéité (54) comportant un premier patin d'étanchéité (54) s'étendant axialement le long de la ligne médiane (22) entre une première extrémité de patin (70) et une seconde extrémité de patin (72) ;
une base d'étanchéité (52) circonscrivant le réseau annulaire des patins d'étanchéité (54), la base d'étanchéité (52) comprenant des première, deuxième et troisième surfaces de base d'étanchéité radiales internes (33, 35, 37), où la troisième surface de base d'étanchéité radiale interne (37) est axialement entre les première et deuxième surfaces de base d'étanchéité radiales internes (33, 35) et est radialement proche de la ligne médiane (22) par rapport aux première et deuxième surfaces de base d'étanchéité radiales internes (33, 35) radialement distales ; et
une pluralité d'éléments à ressort (56), chacun des éléments à ressort (56) étant radialement distal par rapport à un patin d'étanchéité respectif parmi les patins d'étanchéité (54) et relié à un patin d'étanchéité respectif parmi les patins d'étanchéité, et radialement proche de la troisième surface de base d'étanchéité radiale interne (37) ;
**caractérisé par**
un dispositif de joint secondaire (42) ; et
une première structure en anneau (44) conçue et agencée pour au moins soit positionner, soit supporter soit être montée sur le dispositif de joint secondaire (42) axialement séparé de la base d'étanchéité (52) et radialement adjacent au premier patin d'étanchéité (54) au niveau d'une extrémité proximale et au niveau d'une extrémité radialement distale est adjacente à la première surface de base d'étanchéité radiale interne (33) et en prise avec celle-ci.

2. Ensemble joint sans contact, comprenant :
une pluralité de patins d'étanchéité (54) agencés autour d'une ligne médiane (22) dans un réseau annulaire, les patins d'étanchéité (54) comportant un premier patin d'étanchéité (54) s'étendant axialement le long de la ligne médiane (22) entre une première extrémité de patin (70) et une seconde extrémité de patin (72) ;
une base d'étanchéité (52) circonscrivant le réseau annulaire des patins d'étanchéité (54) ; et
une pluralité d'éléments à ressort (56), chacun des éléments à ressort (56) étant radialement entre un patin d'étanchéité respectif parmi les patins d'étanchéité (54) et la base d'étanchéité (52) et reliant un patin d'étanchéité respectif parmi les patins d'étanchéité à la base d'étanchéité ;
où la base d'étanchéité (52) comprend des première, deuxième et troisième surfaces de base d'étanchéité radiales internes (33, 35, 37), où la troisième surface de base d'étanchéité radiale interne (37) est axialement entre les première et deuxième surfaces de base d'étanchéité radiales internes (33, 35) et est radialement proche de la ligne médiane (22) par rapport aux première et deuxième surfaces de base d'étanchéité radiales internes (33, 35) radialement distales ; et
où chacun des éléments à ressort (56) est radialement distal par rapport à la troisième surface de base d'étanchéité radiale interne (37) ;
**caractérisé par**
un dispositif de joint secondaire (42) ; et
une première structure en anneau (44) conçue et agencée pour au moins soit positionner, soit supporter soit être montée sur le dispositif de joint secondaire (42) axialement séparé de la base d'étanchéité (52) et radialement adjacent au premier patin d'étanchéité (54) au niveau d'une extrémité proximale et au niveau d'une extrémité radialement distale est adjacente à la première surface de base d'étanchéité radiale interne (33) et en prise avec celle-ci.

3. Ensemble joint sans contact selon la revendication 1 ou 2, comprenant en outre un anneau de support (100) de dispositif de joint secondaire radialement adjacent à la première surface de base d'étanchéité radiale interne (33) et en prise avec celle-ci, où l'anneau de support (100) de dispositif de joint secondaire est radialement proche de la première surface de base d'étanchéité radiale interne (33).

4. Ensemble joint sans contact selon la revendication 1, 2 ou 3, comprenant en outre une seconde structure en anneau (48) qui est adjacente à la seconde première surface de base d'étanchéité radiale interne (35) et en prise avec celle-ci, où la seconde structure en anneau (48) est radialement proche de la seconde surface de base d'étanchéité radiale interne (35).

5. Ensemble joint sans contact selon une quelconque revendication précédente, où l'ensemble joint comprend un alliage de nickel.

6. Ensemble sans contact selon l'une quelconque des revendications 1 à 4, où l'ensemble joint comprend soit un alliage de cobalt soit de l'aluminium.

7. Ensemble joint sans contact selon une quelconque revendication précédente, où le premier patin d'étanchéité (54) s'étend circonférentiellement, au niveau de la première extrémité de patin (70), entre un premier côté de patin (66) et un second côté de patin (68) pour une longueur de patin d'étanchéité.

8. Ensemble joint sans contact selon une quelconque revendication précédente, où les patins d'étanchéité (54) forment collectivement une surface d'extrémité sensiblement annulaire (76) au niveau de la seconde extrémité de patin (72).

9. Ensemble joint sans contact selon une quelconque revendication précédente, où la base d'étanchéité (52) est reliée à une structure de stator (24) qui est sensiblement cylindrique et s'étend circonférentiellement autour de la ligne médiane (22) et est orientées vers celle-ci.

10. Ensemble pour un équipement de rotation muni d'une ligne médiane axiale, l'ensemble comprenant :
une structure de stator (24) ;
une structure de rotor (26) ; et
un ensemble joint (28) conçu pour sceller sensiblement un espace annulaire (30) entre la structure de stator (24) et la structure de rotor (26), l'ensemble joint (28) comprenant un dispositif de joint hydrostatique sans contact (40) comportant une pluralité de patins d'étanchéité (54), une base d'étanchéité (52) et une pluralité d'éléments à ressort (56) ;
les patins d'étanchéité (54) agencés autour d'une ligne médiane (22) dans un réseau annulaire, les patins d'étanchéité (54) mettant en prise de manière étanche la structure de rotor (26) et comportant un premier patin d'étanchéité (54) s'étendant axialement le long de la ligne médiane (22) entre une première extrémité de patin (70) et une seconde extrémité de patin (72) ;
une pluralité d'éléments à ressort (56), chacun des éléments à ressort (56) étant radialement entre un patin d'étanchéité respectif parmi les patins d'étanchéité (54) et la base d'étanchéité (52) et reliant un patin d'étanchéité respectif parmi les patins d'étanchéité à la base d'étanchéité ;
où la base d'étanchéité (52) comprend des première, deuxième et troisième surfaces de base d'étanchéité radiales internes (33, 35, 37), où la troisième surface de base d'étanchéité radiale interne (37) est axialement entre les première et deuxième surfaces de base d'étanchéité radiales internes (33, 35) et est radialement proche de la ligne médiane (22) par rapport aux première et deuxième surfaces de base d'étanchéité radiales internes (33, 35) radialement distales ; et
où chacun des éléments à ressort (56) est radialement distal par rapport à la troisième surface de base d'étanchéité radiale interne (37) ;
**caractérisé par**
un dispositif de joint secondaire (42) ; et
une première structure en anneau (44) conçue et agencée pour au moins soit positionner, soit supporter soit être montée sur le dispositif de joint secondaire (42) axialement séparé de la base d'étanchéité (52) et radialement adjacent au premier patin d'étanchéité (54) au niveau d'une extrémité proximale et au niveau d'une extrémité radialement distale est adjacente à la première surface de base d'étanchéité radiale interne (33) et en prise avec celle-ci.

11. Ensemble selon la revendication 10, comprenant en outre un anneau de support (100) de dispositif de joint secondaire radialement adjacent à la première surface de base d'étanchéité radiale interne (33) et en prise avec celle-ci, où l'anneau de support (100) de dispositif de joint secondaire est radialement proche de la première surface de base d'étanchéité radiale interne (33).

12. Ensemble selon la revendication 10 ou 11, où la base d'étanchéité (52) est radialement adjacente et reliée à la structure de stator (24).
